# EUROPEAN PATENT SPECIFICATION

(11) **EP 1 447 313 B1**
(45) Date of publication and mention of the grant of the patent: **03.09.2008**
(21) Application number: 04002948.0
(22) Date of filing: 10.02.2004
(51) Int. Cl.: B62J 1/12

(54) **Seat structure for a saddle-type vehicle**
Sitzstruktur eines Fahrzeuges mit Sattel
Structure de selle pour véhicules munis d'une selle

(30) Priority: 12.02.2003 JP 2003033826
(43) Date of publication of application: 18.08.2004
(73) Proprietor: Honda Motor Co., Ltd., Tokyo (JP)
(72) Inventor: Maeda, Tetsuaki, Wako-shi Saitama (JP); Sasaki, Norihiko, Wako-shi Saitama (JP); Inaoka, Hiroshi, Wako-shi Saitama (JP); Takami, Noritake, Wako-shi Saitama (JP); Ishida, Atsushi, Wako-shi Saitama (JP)
(74) Representative: Liska, Horst

(56) References cited:
- DE-A1- 19 753 569
- GB-A- 191 112 532
- JP-A- 9 011 944
- US-A- 6 073 948

## Description

The present invention relates to a saddle-type vehicle where a seat having a seating section and a vertical wall section rising upwards from a rear end of the seating section is provided at an upper rear part of a vehicle, with a backrest being provided to the front of the vertical wall section, and particularly relates to an improved seat structure.

Motorcycles such as disclosed in, for example, Japanese Patent Laid-open Publication No. Hei. 9-11944 etc. where a backrest capable of being moved backwards and forwards is provided for a driver on a main seat between a main seat and a pillion seat of a tandem-type seat are well-known.

In the related art described above, a structure is adopted where a pair of left and right support stays extending rearwards from the backrest are supported at a baseplate at a pillion seat side, the position of which can be adjusted in a backwards and forwards direction. With this structure, there are limits regarding the extent to which the rigidity with which the backrest is supported by the support stays can be increased, and it is difficult to reduce vibration of the backrest.
In particular, when the extent of projection of the support stays is changed by adjustment of the position backwards and forwards, the resonance point of the vibration is changed, and there are cases where there is resonance with vehicle vibration.

Document GB 12532 A discloses a seat structure for a motorcycle having a seat with a seat section and a backrest. The backrest is mounted on a vertically adjustable shaft, wherein, between the backrest and said shaft, two coil springs are arranged to provide a damping structure for the backrest.

Further, US 6 073 948 A discloses a damping structure for a backrest of a motorcycle which reduces the propagation of engine vibrations to a handle grip that surrounds the backrest. The backrest is screwed, for this purpose, between two cushioning members to the vehicle frame.

Further, DE 197 53 569 A1 discloses a seat structure of a bicycle having a seating section and a backrest. The backrest is hinged at its lower part to the vehicle body such that an inclination of the backrest can be adjusted.

In order to resolve these problems, it is the object of the present invention to provide a seat structure for a saddle-type vehicle capable of rendering increase in rigidity of a backrest unnecessary and that is capable of effectively reducing vibration of the backrest.

In order to achieve the aforementioned object, the invention provides a seat structure according to claim 1. Accordingly, a seat structure for a saddle-type vehicle includes a seat having a seating section and a vertical wall section rising upwards from a rear end of the seating section provided at an upper rear part of a vehicle, with a backrest being provided to the front of the vertical wall section, wherein a dynamic damper is installed at a baseplate of the backrest.

According to this configuration, increase of supporting rigidity for the backrest is rendered unnecessary and vibrations of the backrest can be effectively reduced because it is possible to suppress vibration of the backrest using the dynamic damper.

Further, the backrest is supported at the seat so as to be capable of being moved backwards and forwards. According to this configuration, even if the resonance point of the vibration changes due to it being possible to move the backrest backwards and forwards, optimum vibration reduction is possible by setting the dynamic damper in such a manner that vibration is reduced in line with the frequency at the position where vibration becomes large in synchronization with the vehicle body.

In addition, a pair of left and right support stays are fitted at the baseplate of the backrest extending to the rear so as to constitute part of a movement position adjustment mechanism for adjusting a position of the backrest in a direction from front to rear, with the dynamic damper being installed at the baseplate of the backrest across the support stays. According to this configuration, rigidity of the backrest is comparatively small at substantially the central part of the backrest, with vibration reduction due to arrangement of the dynamic damper at this portion being more effective as a result.

According to an embodiment of the invention, sidewall sections covering the dynamic damper as viewed from the sides are provided on the left and right sides of the backrest. According to this configuration, the dynamic damper can no longer be seen from the sides and external appearance is improved.

According to another embodiment of the invention, a gap is provided between the vertical wall section and the dynamic damper. According to this configuration, the dynamic damper does not interfere with the vertical wall section which is provided to the rear, and the function of the dynamic damper is therefore prevented from becoming impaired.

According to the invention as disclosed in claim 1, increase of supporting rigidity for the backrest is rendered unnecessary and vibrations of the backrest can be effectively reduced because vibration of the backrest is suppressed by the dynamic damper.

In addition, even if the resonance point of the vibration changes due to the backrest being capable of being moved in a direction from the front to the rear, by setting the dynamic damper so that vibration is reduced in line with the frequency at the position where the vibration becomes large in synchronization with the vehicle body, optimum vibration reduction is possible.

In addition, the rigidity of the backrest is comparatively small at substantially the center part of the backrest and the dynamic damper is arranged at this portion so as to make vibration reduction more effective.

Embodiments of the present invention will now be described below based on the attached drawings.
FIG. 1 is a perspective view of a scooter-type two-wheeled vehicle.
FIG. 2 is a side-view of the scooter-type motorcycle shown with a rear part of the vehicle cut-away.
FIG. 3 is an enlarged vertical cross-section of the vicinity of the backrest.
FIG. 4 is a cross sectional drawing along line 4 - 4 in Fig. 3.
FIG. 5 is a cross sectional drawing along line 5 - 5 in Fig. 3.
FIG. 6 is a transverse cross-section as viewed from the direction of arrow 6 of FIG. 3.
FIG. 7 is a cross sectional drawing along line 7 - 7 in Fig. 3.
FIG. 8 is an enlarged view of the essential parts of FIG. 5.
FIG. 9 is a cross sectional drawing along line 9 - 9 in Fig. 8.

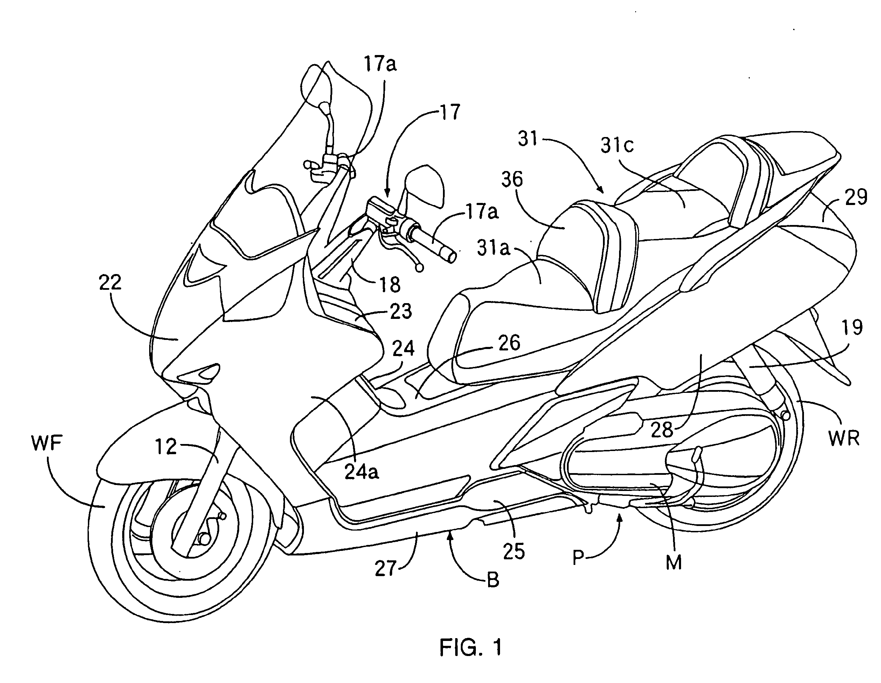

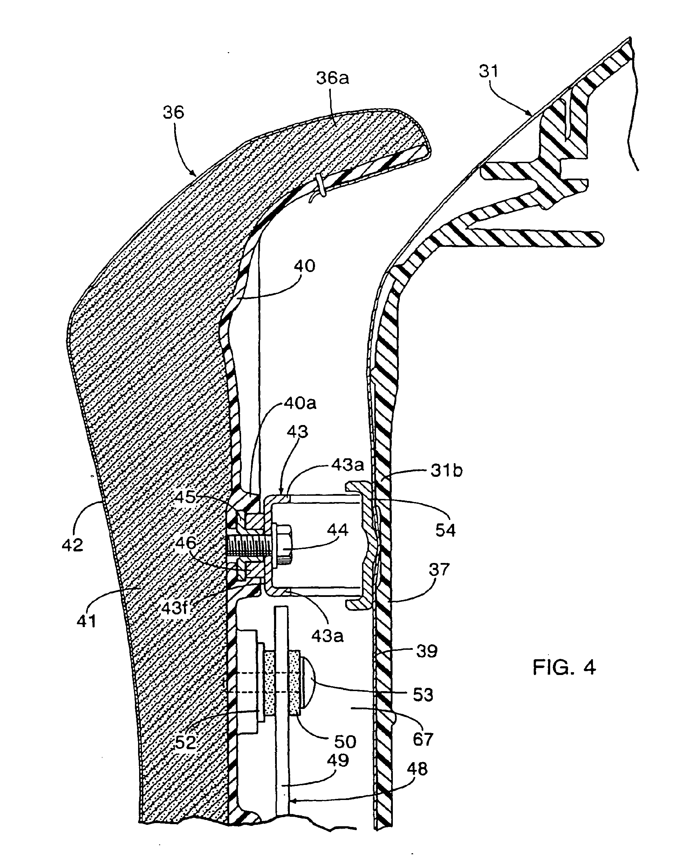

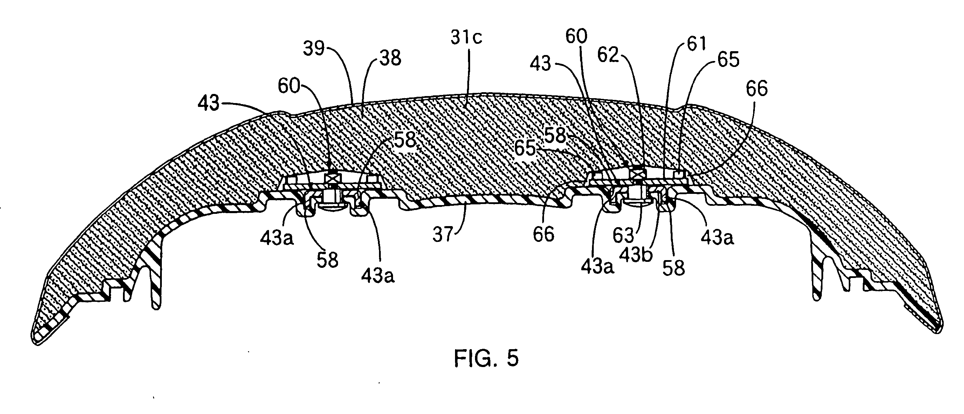

FIG. 1 to FIG. 9 show an embodiment for when the present invention is applied to a scooter-type motorcycle.

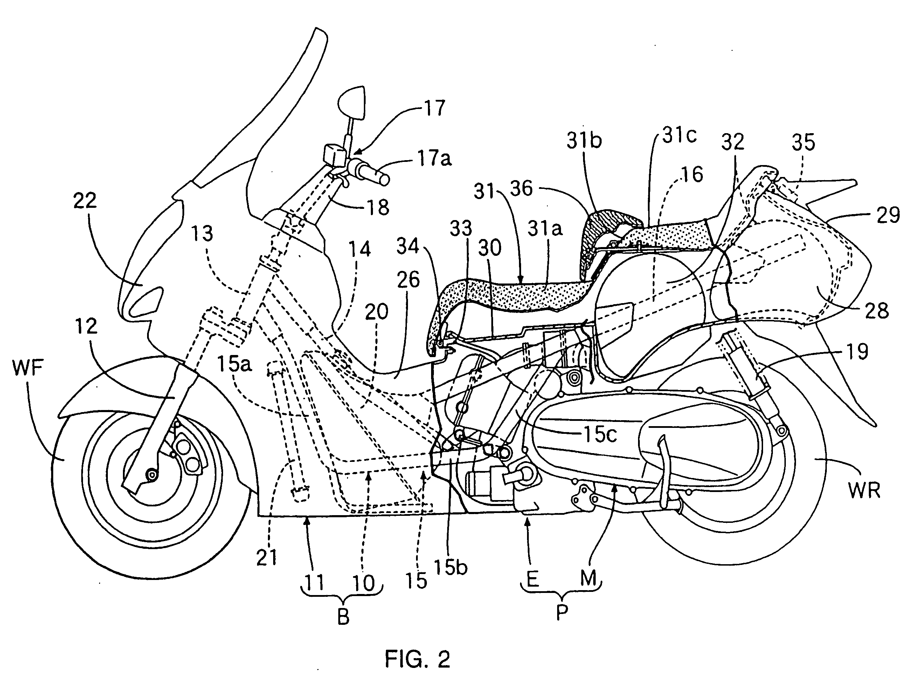

First, in FIG. 1 and FIG. 2, a vehicle body B of a scooter-type motorcycle constituting a saddle-type vehicle is comprised of a vehicle frame 10, and a vehicle cover 11 of synthetic resin covering the vehicle frame 10. The vehicle frame 10 is equipped with a head pipe 13 for supporting a front fork 12 axially supporting a front wheel WF in a steerable manner, a pair of left and right upper frames 14 ... extending downwards to the rear from the head pipe 13, a pair of left and right lower frames 15 ... coupled with the head pipe 13 lower down than the upper frames 14 ... and coupled to rear ends of the upper frames 14 ... , and a pair of left and right rear frames 16 ... extending rearwards and upwards from the rear parts of the upper frames 14....

The lower frames 15 ... are equipped with front inclining frames 15a extending downwards and to the rear from the head pipe 13, horizontal frames 15b extending substantially horizontally to the rear from lower ends of the front inclining frames 15a, and rear inclining frames 15c extending upwards and to the rear from the rear ends of the horizontal frames 15b .... The rear ends of the upper frames 14 ... engage with the rear ends of the horizontal frames 15b, and the rear ends of the rear inclining frames 15c ... engage with central parts of the rear frames 16 ....

A steering handlebar 17 is coupled to an upper part of the front fork 12. The steering handlebar 17 is a so-called "chopper" type where grips 17a ... on both ends are made comparatively high, and are pulled out towards the rear, and is covered by a handlebar cover 18.

An engine E is supported at a central part in a direction from the front to the rear of the vehicle frame 10, with a cylinder shaft line inclined to the front and upward and arranged to the front of the rear wheel WR. A front part of a continuously variable transmission M for transmitting output of the engine E constituting a power unit P in cooperation with the engine E to the rear wheel WR in a continuously variable manner is supported at the engine E so as to be capable of swinging up and down. The rear wheel WR is axially supported at the rear part of the power unit P, and a rear shock-absorbing unit 19 is provided between a rear end part of the vehicle frame 10 and the power unit P.

A fuel tank 20 arranged to the front of the engine E is mounted at the front part of the vehicle frame 10 at a portion surrounded by the upper frames 14 ... and the lower frames 15 .... A radiator 21 is mounted at the front inclining frames 15a at the lower frames 15 ... further to the front than the fuel tank 20.

The vehicle cover 11 covers part of the power unit P, the radiator 21, the fuel tank 20, and the vehicle frame 10, and is comprised of a front cowling 22 covering a front part of the vehicle frame 10 and above the front wheel WF, an upper cover 23 covering an upper part opening of the front cowling 22, an inner covering 24 having a pair of left and right leg shields 24a ... and covering a rear part of the front cowling 22, a pair of left and right step floors 25 ... coupled with the lower parts of both sides of the front cowling 22, a floor tunnel 26 protruding upwards between the step floors 25 ... so as to join with the inner cover 24 and covering the fuel tank 20, skirting sections 27 ... suspended downwards from the outside edges of the step floors 25 ... , rear side covers 28 ... joining with the skirting sections 27 ... , step floors 25 ... and floor tunnel 26 so as to cover both sides of the rear part of the vehicle frame 10, and a rear cover 29 mutually coupling with both of the rear side covers 28 ... so as to cover the rear part of the vehicle frame 10.

A tandem-type seat 31 covering a storage box 30 arranged with the covers 28 ..., 29 above the rear side covers 28 ... and the rear cover 29 is arranged so as to be supported by both of the rear frames 16 .... In order to make it possible to store storage items such as a helmet 32 etc.... in the storage box 30 and make it possible to remove such items from the storage box 30, the front part of the seat 31 is supported to as to be swingable up and down via a hinge 34 at a hinge support part 33 provided across both of the rear frames 16 ... , with a seat lock mechanism 35 being provided across the rear and part of the vehicle frame 10 and the rear end part of the seat 31.

The tandem-type seat 31 is equipped with a front seating section 31a for a rider, a vertical wall section 31 b rising upwards from a rear end of the front seating section 31a, and a rear seating section 31c for a passenger with a front end lined up with an upper end of the vertical wall section 31 b, with a backrest 36 capable of being moved backwards and forwards being provided to the front of the vertical wall section 31b.

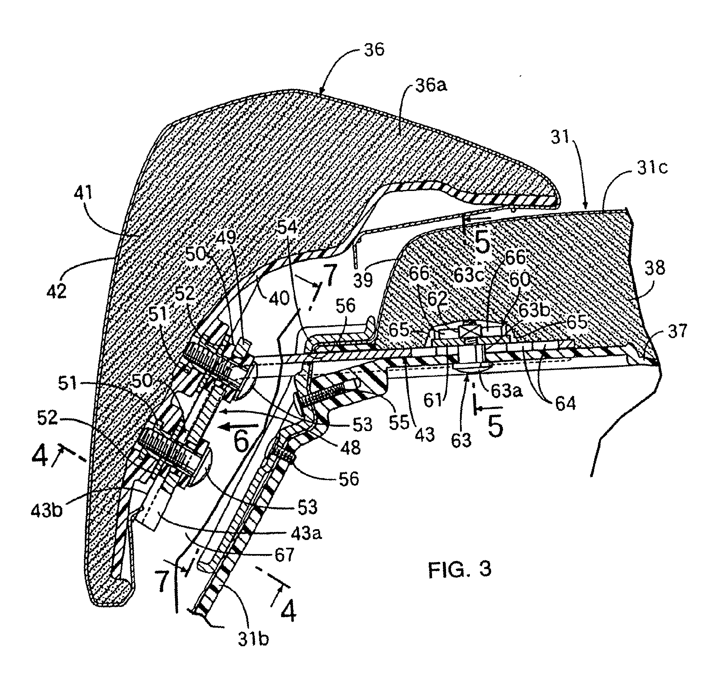

Referring to FIG. 3 to FIG. 5, the seat 31 is comprised of a baseplate 37 consisting of hardened synthetic resin, cushioning material 38 overlaid on the baseplate 37 at portions corresponding to the front seating section 31 a and the rear seating section 31c, and covering 39 for covering the cushioning material 38 fixed to the baseplate 37, with the vertical wall section 31 b being comprised of the baseplate 37 and the covering 39, with the cushioning material 38 being excluded.

Further, as with the seat 31, the backrest 36 is comprised of a baseplate 40 made of hardened synthetic resin, cushioning material 41 overlaid on the baseplate 40, and covering 42 covering part of the baseplate 40 and the cushioning material 41.

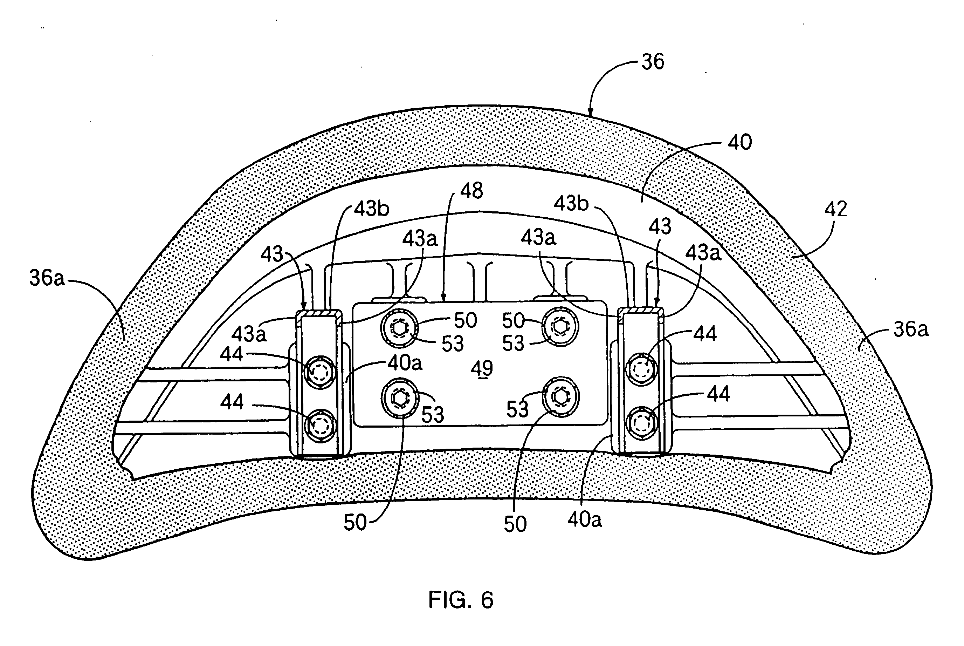

Referring to FIG. 6, front ends of a pair of left and right support stays 43, 43 extending to the rear are fastened by upper and lower pairs of bolts 44, 44 ... to the rear surface of the baseplate 40 at the backrest 36.

The support stays 43 have a lateral cross-section of an approximate U-shape with left and right pairs of side plate parts 43a, 43a with mutual spaces opened therebetween being mutually coupled by a coupling plate part 43b, and with the front end part appearing to be bent downwards in substantially the shape of an L when viewed from the side. Metallic nuts 45 ... and ring-shaped receiving members 46 ... projecting from fitting bosses 40a ... and surrounding the nuts 45 are insert-fitted at fitting bosses 40a formed integrally at the baseplate 40 at the backrest 36. Front ends of the support stays 43, 43 are then fastened to the back of the baseplate 40 of the backrest 36 by screwing the bolts 44 passing through the front ends of the support stays 43 so as to come into contact with each receiving member 46 into the nuts 45 so as to fasten them.

Further, a dynamic damper 48 is installed across the support stays 43, 43 at the back of the baseplate 40 of the backrest 36. The dynamic damper 48 is equipped with a weighting plate 49 formed as a rectangular flat plate which is long, for example, in a direction from left to right, and a plurality of, for example, four resilient mounting members 50, 50 ... installed at the weighting plate 49. Each of the resilient mounting members 50, 50 ... are installed at the weighting plate 49 in such a manner as to be positioned at each comer of a virtual rectangle depicted on the weighting plate 49 that is analogous to the outer shape of the weighting plate 49.

On the other hand, nuts 51 corresponding to each of the resilient mounting members 50, 50 ... are inserted at the baseplate 40 of the backrest 36. The dynamic damper 48 is then installed to the back of the baseplate 40 of the backrest 36 by threading and fastening bolts 53 ... passing through each resilient mounting member 50 via washers 52 ... between each nut 51 with the nuts 51.

Further, side walls 36a, 36a covering the dynamic damper 48 as viewed from the side are provided at the left and right sides of the backrest 36.

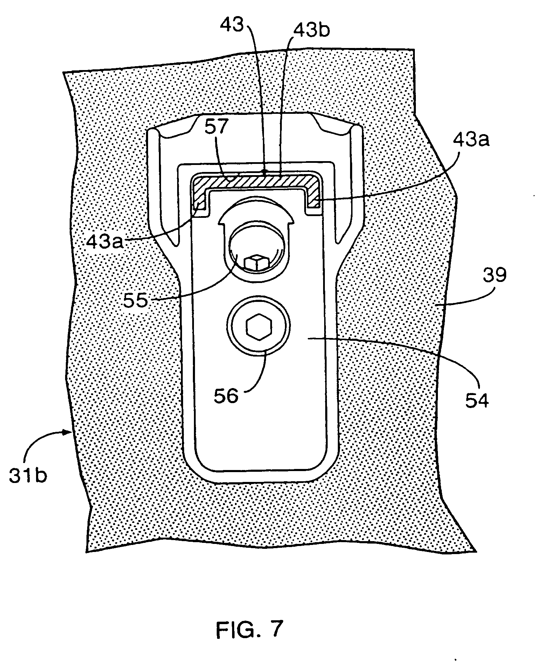

In FIG. 7, at the front surface of the vertical wall section 31b, guide plates 54 ... consisting of hardened synthetic resin and having through-holes 57 ... through which each of the support stays 43 ... pass are fastened by pairs of upper and lower screw members 55, 56 .... Further, guide grooves 58, 58 ... which the side plate parts 43a, 43a ... of each of the support stays 43 engage with in a slidable manner are provided at an upper surface of the baseplate 37 at the rear seating section 31c so as to join with the through-holes 57.

The support stays 43, 43 are inserted from the insertion through-holes 57 ... so as to be inserted between the baseplate 37 of the rear seating section 31c and the cushioning material 38 in such a manner that the side plate parts 43a, 43a ... engage with the guide grooves 58, 58 ... in a slidable manner. The backrest 36 is supported at the rear seating section 31c of the seat 31 so as to be moveable backwards and forwards.

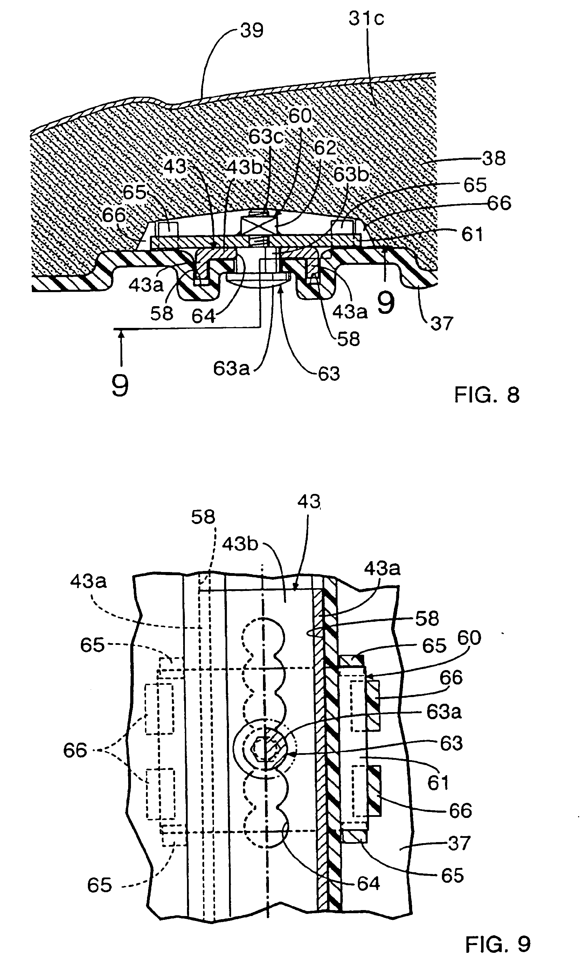

Referring to FIG. 8 and FIG. 9, the positions of the support stays 43, 43 ... in directions to the front and rear can be adjusted using individual movement position adjustment mechanisms 60 .... The movement position adjustment mechanisms 60 are comprised of pressing plates 61, sandwiching the coupling plate 43b of a support stay 43 between the support stay 43 and the baseplate 37 of the rear seating section 31c, weld nuts 62 for fixing the pressing plates 61, and a lock bolt 63 passing through the baseplate 37, coupling plate 43b, and pressing plate 61 so as to screw into the weld nut 62. The lock bolt 63 is inserted at one location at the coupling plate 43b selected from a plurality of locations opened in a direction from front to rear of the support stay 43.

The lock bolt 63 is comprised of a wide head part 63a engaging with a lower surface of the baseplate 37, a through-inserting shaft part 63b inserted through the baseplate 37 and the support stay 43 so as to join with the same axis at the wide head part 63a, and a screw axis 63c inserted through the pressing plate 61 so as to screw into the weld nut 62 and join with the same axis at the through-inserting shaft part 63b. The through-inserting shaft part 63b is formed with a smaller diameter than the wide head part 63a, and the screw axis 63c is formed with a smaller diameter than the through-inserting shaft part 63b.

At the coupling plate part 43b of the support stay 43, a plurality of insert through-holes 64, 64 ... arranged in a direction from front to rear, i.e. arranged at positions opening up spaces in a longitudinal direction of the support stay 43 are provided so as to mutually join neighboring parts. The through-holes 64, 64 ... are formed for the through-inserting shaft parts 63b of the lock bolt 63 to be inserted through.

The pressing plate 61 is formed in the shape of a square so as to be in sliding contact with the coupling plate part 43b of the support stay 43, with pairs of groups of two engaging claws 65, 65 ... spring-engaging with both end edge parts of the pressing plate 61 along a lengthwise direction of the support stay 43, and pairs of groups of two engaging claws 66, 66 ... spring-engaging with both side edges of the pressing plate 61 formed in an integrally projecting manner at an upper surface of the bottom plate 37. The pressing plate 61 is therefore supported so as to be positioned at the baseplate 37 by the engaging claws 65 ..., 66 ...

According to the movement position adjustment mechanism 60, as a result of selecting one of the plurality of insert through-holes 64, 64 ... the support stays 43 ... are provided, with so that the lock bolt 63 inserted through the selected insert through-hole 64 screws into the weld nut 62 so as to be fastened, the position of the support stay 43, i.e. the position to the front and rear of the backrest 36 can be decided. Further, by loosening the lock bolt 63 so as to disengage the lock bolt 63 from the insertion through-hole 64, the support stay 43, i.e. the backrest 36, can be moved backwards and forwards.

The movement position adjustment mechanism 60 is set in such a manner that a gap 67 occurs between the vertical wall section 31b of the seat 31 and the dynamic damper 48 in a state where the backrest 36 is retracted to a maximum extent.

Next, to describe the operation of this embodiment, the backrest 36 is arranged to the front of the vertical wall section 31b rising upwards from the rear end of the front seating section 31a at the tandem-type seat 31, and a dynamic damper 48 is installed at the baseplate 40 of this backrest 36.

Therefore, increase of supporting rigidity for the backrest 36 is rendered unnecessary and vibrations of the backrest 36 can be effectively reduced because it is possible to suppress vibration of the backrest 36 using the dynamic damper 48.

However, the backrest 36 is supported at the seat 31 in a manner capable of movement from front to back but even if the resonance point of the vibration changes due to the backrest 36 being capable of being moved in a direction from the front to the rear, by setting the dynamic damper 48 so that vibration is reduced in line with the frequency at the position where the vibration becomes large in synchronization with the vehicle body, optimum vibration reduction is possible.

Further, at the baseplate 40 of the backrest 36, a pair of left and right support stays 43, 43 are fitted extending to the rear so as to constitute part of the movement position adjustment mechanism 60 for adjusting the position of the backrest 36 backwards and forwards, and the dynamic damper 48 is fitted at the baseplate 40 between these support stays 43, 43. The rigidity of the backrest 36 is comparatively small at substantially the center part of the backrest 36 and the dynamic damper 48 is arranged at this portion so as to make vibration reduction more effective.

Further, side walls 36a, 36a covering the dynamic damper 48 as viewed from the side are provided at the left and right sides of the backrest 36 so that the dynamic damper 48 cannot be seen from the sides, which in turn improves external appearance.

A gap 67 occurs between the vertical wall section 31b and the dynamic damper 48 regardless of the movement position of the backrest 36. The dynamic damper 48 therefore does not interfere with the vertical wall section 3 1 b to the rear, and damage to the function of the dynamic damper 48 is prevented.

An embodiment of the present invention has been described in detail above, but the present invention is not thus limited and various design changes are possible without departing from the scope of the appended claims.

For example, the present invention may also be applied to a three-wheeled motorized vehicle or a four-wheeled motorized vehicle.

The problem of the invention is to render increasing of supporting rigidity of a backrest unnecessary, and to effectively reduce vibration of the backrest in a saddle-type vehicle where a seat having a seating section and a vertical wall section rising upwards from a rear end of the seating section is provided at an upper rear part of a vehicle, with a backrest being provided to the front of the vertical wall section.

In the invention, a dynamic damper 48 is installed at a baseplate 40 of a backrest 36.

## Claims

1. A seat structure for a saddle-type vehicle comprising a seat (31) having a seating section (31a) and a vertical wall section (31 b) rising upwards from a rear end of the seating section (31a) provided at an upper rear part of a vehicle (B), with a backrest (36) being provided to the front of the vertical wall section (31b), wherein a dynamic damper (48) is installed at a baseplate (40) of the backrest (36),
wherein the backrest (36) is supported at the seat (31) so as to be capable of being moved backwards and forwards, **characterized in that**
a pair of left and right support stays (43) are fitted at the baseplate (40) of the backrest (36) extending to the rear so as to constitute part of a movement position adjustment mechanism (60) for adjusting a position of the backrest (40) in a direction from front to rear, with the dynamic damper (48) being installed at the baseplate (40) of the backrest (36) across the support stays (43).

2. The seat structure for a saddle-type vehicle as disclosed in claim 1, wherein sidewall sections (36a) covering the dynamic damper (48) as viewed from the sides are provided on the left and right sides of the backrest (36).

3. The seat structure for a saddle-type vehicle as disclosed in claim 1, wherein a gap (67) is provided between the vertical wall section (31b) and the dynamic damper (48).

## Patentansprüche

1. Sitzstruktur für ein Fahrzeug vom Typ mit Sattel, umfassend einen Sitz (31) mit einem Sitzabschnitt (31 a) und einem vertikalen Wandabschnitt (31 b), der sich von einem hinteren Ende des Sitzabschnitts (31 a) aus nach oben erstreckt, wobei der Sitz (31) an einem oberen hinteren Abschnitt eines Fahrzeugs (B) vorgesehen ist, wobei eine Rückenlehne (36) an der Vorderseite des vertikalen Wandabschnitts (31 b) vorgesehen ist, wobei ein dynamischer Dämpfer (48) an einer Basisplatte (40) der Rückenlehne (36) installiert ist,
wobei die Rückenlehne (36) an dem Sitz (31) so getragen ist, dass sie rückwärts und vorwärts bewegbar ist, **dadurch gekennzeichnet, dass** ein Paar linker und rechter Stützstreben (43) an der Basisplatte (40) der Rückenlehne (36) angebracht sind, welche sich nach hinten erstrecken, so dass sie einen Teil eines Bewegungsposition-Einstellmechanismus (60) zum Einstellen einer Position der Rückenlehne (40) in einer Richtung von vorn nach hinten bilden, wobei der dynamische Dämpfer (48) an der Basisplatte (40) der Rückenlehne (36) quer zwischen den Trägerstreben (43) installiert ist.

2. Sitzstruktur für ein Fahrzeug vom Typ mit Sattel, wie in Anspruch 1 definiert, wobei Seitenwandabschnitte (36a), welche den dynamischen Dämpfer (48) abdecken, bei Betrachtung von den Seiten aus, auf der linken und auf der rechten Seite der Rückenlehne (36) vorgesehen sind.

3. Sitzstruktur für ein Fahrzeug vom Typ mit Sattel, wie in Anspruch 1 definiert, wobei ein Zwischenraum (67) zwischen dem vertikalen Wandabschnitt (31 b) und dem dynamischen Dämpfer (48) vorgesehen ist.

## Revendications

1. Structure de siège pour un véhicule de type à selle comprenant un siège (31) possédant une section d'assise (31a) et une section de paroi verticale (31b) s'élevant vers le haut depuis une extrémité arrière de la section d'assise (31a) située au niveau d'une partie arrière supérieure d'un véhicule (B), un dossier (36) étant disposé sur l'avant de la section de paroi verticale (31b), dans laquelle un amortisseur dynamique (48) est installé au niveau d'une plaque de base (40) du dossier (36), dans laquelle le dossier (36) est supporté au niveau du siège (31) afin de pouvoir être déplacé vers l'arrière et vers l'avant, **caractérisée en ce qu'**une paire d'éléments de soutien gauche et droit (43) sont placés au niveau de la plaque de base (40) du dossier (36) s'étendant vers l'arrière afin de constituer une partie d'un mécanisme d'ajustement de position de déplacement (60) destiné à ajuster une position du dossier (40) dans une direction de l'avant vers l'arrière, l'amortisseur dynamique (48) étant installé au niveau de la plaque de base (40) du dossier (36) au travers des éléments de soutien (43).

2. Structure de siège pour un véhicule de type à selle selon la revendication 1, dans laquelle les sections des parois latérales (36a) recouvrant l'amortisseur dynamique (48) telles que vues depuis les côtés sont disposées sur les côtés gauche et droit du dossier (36).

3. Structure de siège pour un véhicule de type à selle selon la revendication 1, dans laquelle un espace (67) est prévu entre la section de paroi verticale (31b) et l'amortisseur dynamique (48).
